# EUROPÄISCHE PATENTSCHRIFT

(11) **EP 2 071 211 B1**
(45) Veröffentlichungstag und Bekanntmachung des Hinweises auf die Patenterteilung: **24.01.2018**
(21) Anmeldenummer: 08021035.4
(22) Anmeldetag: 04.12.2008
(51) Int. Cl.: F16F 15/023, F16F 9/04

(54) **Schwingungsisolator zur Verwendung im Vakuum**
Oscillation isolator for use in a vacuum
Isolant de vibrations destiné à l'utilisation sous vide

(30) Priorität: 10.12.2007 DE 102007059631
(43) Veröffentlichungstag der Anmeldung: 17.06.2009
(73) Patentinhaber: Integrated Dynamics Engineering GmbH, 65479 Raunheim (DE)
(72) Erfinder: Heiland, Klaus Peter, 65479 Raunheim (DE)
(74) Vertreter: Herden, Andreas F.

(56) Entgegenhaltungen:
- WO-A2-2005/111726
- US-A- 5 285 699
- US-A1- 2002 140 916

## Beschreibung

Die Erfindung betrifft einen Schwingungsisolator sowie eine Anordnung mit einem Schwingungsisolator.

### Hintergrund der Erfindung

Schwingungsisolatoren sind bekannt. Derartige Isolatoren, wie sie beispielsweise für Lithographiegeräte eingesetzt werden, umfassen üblicherweise eine offene oder geschlossene Luftfeder, welche vorzugsweise sowohl vertikal als auch horizontal eine niedrige Eigenfrequenz aufweist.

Mit derartigen Isolatoren lassen sich hohe Isolationswirkungen erzielen.

Neben einer Luftfeder sind in derartigen Schwingungsisolatoren zumeist noch andere Komponenten, wie Motoren zur horizontalen und/oder vertikalen Einstellung, Sensoren oder Aktoren, um das System aktiv zu beeinflussen, integriert.

Ein Schwingungsisolationssystem ist beispielsweise in der Europäischen Patentschrift EP 0 927 380 B1 beschrieben. Die Europäische Patentanmeldung EP 1 803 963 beschreibt ein horizontal und vertikal wirksames Luftlager. Ein weiterer Schwingungsisolator ist aus der US 2002/0140916 bekannt. Auf die in vorstehenden Dokumenten beschriebenen gattungsbildenden Vorrichtungen wird vollumfänglich Bezug genommen.

Im Zuge fortschreitender Miniaturisierung in der Halbleitertechnologie ist es zunehmend nötig, die Produktion von Halbleiterbauteilen zumindest teilweise in einem Vakuum durchzuführen. Nur so können beispielsweise kleinste Chipstrukturen in der nötigen Genauigkeit abgebildet werden. Auch bei der Produktion von Displays wird teilweise auf Vakuumtechnologien zurückgegriffen, insbesondere kann eine Produktion nicht nur in geschlossenen Vakuumkammern, sondern auch in einem sogenannten offenen Vakuum stattfinden.

Trotz des Vakuums sind die verwendeten Geräte äußerst empfindlich gegen Schwingungen, welche sich auch über den Boden zu den jeweiligen Geräten fortsetzen können. Daher werden derartige Maschinen, wie Waferbelichtungsmaschinen, schwingungsisoliert gelagert.

Der Einsatz von bekannten Schwingungsisolatoren, insbesondere von gekapselten Luftlagern, hat den Nachteil, daß nunmehr Peripheriekomponenten wie elektrische Zuleitungen, elektronische Steuerungsmodule, Sensoren oder Zuleitungen für Kühlmittelzufuhr Vakuumbedingungen ausgesetzt sind.

Daher ist zum einen eine besondere Dimensionierung der Peripheriekomponenten auf Vakuumbedingungen nötig, damit es nicht zu Beschädigungen, beispielsweise von elektrischen Komponenten aufgrund der bei bestimmten Drücken stark reduzierten Überschlagspannungen kommt. Auch fertigungsbedingte Einschlüsse von Luftblasen, wie zum Beispiel von Bauteilen, welche in Harz vergossen sind, vorkommen, können zu Beschädigungen führen.

Des weiteren erfolgt im Vakuum die Wärmeabgabe von Komponenten fast ausschließlich über Wärmestrahlung und Wärmeleitung. So können benachbarte Geräte gestört werden oder das jeweilige Bauteil überhitzen.

Auch bewirken die notwendigen Kabel und Fluiddurchführungen Leckagen, welche das Vakuum verunreinigen.

### Aufgabe der Erfindung

Der Erfindung liegt demgegenüber die Aufgabe zugrunde, einen Schwingungsisolator beziehungsweise eine Anordnung oder ein System mit einem Schwingungsisolator bereit zu stellen, bei welchen die genannten Nachteile des Stands der Technik zumindest reduziert sind.

Es ist insbesondere eine Aufgabe der Erfindung auf eine Auslegung von elektrischen und/oder mechanischen Peripheriekomponenten, wie Sensoren, Aktoren etc., für Vakuumbedingungen verzichten zu können.

Eine weitere Aufgabe der Erfindung ist es, die Kühlung aktiver Bauelemente wie Motoren, Aktoren und elektrischen Steuerungen zu verbessern.

Eine weitere Aufgabe der Erfindung ist es, die durch einen Schwingungsisolator in einem Vakuumsystem verursachte Leckage zu verringern.

Insbesondere soll die Leckage zwischen einem Isolatorgehäuse und einer Vakuumkammer reduziert werden.

Die Aufgabe der Erfindung wird bereits durch einen Schwingungsisolator nach einem der unabhängigen Ansprüche sowie durch eine Anordnung mit einem Schwingungsisolator gelöst.

Bevorzugte Ausführungsform und Weiterbildung der Erfindung sind den jeweiligen Unteransprüchen zu entnehmen.

Danach ist ein Schwingungsisolator zur Verwendung im Vakuum vorgesehen. Unter einem Vakuum im Sinne der Erfindung wird jeder Unterdruck unterhalb Umgebungsdruck verstanden, also ein Bereich vom Grobvakuum bis zum Ultrahochvakuum.

Der Schwingungsisolator umfaßt eine Feder, welche vorzugsweise als Luftfeder ausgestaltet ist. Die Feder umfaßt einen im wesentlichen fluiddichten Raum, welcher insbesondere den Arbeitsraum einer Luftfeder bildet. Sofern die Feder als Luftfeder ausgestaltet ist, handelt es sich vorzugsweise um eine insbesondere mit einem Faltenbalg eingekapselte Luftfeder. Bei einer alternativen Ausführungsform der Erfindung kann aber auch ein offenes Luftlager mit geringer Leckrate verwendet werden.

Gemäß der Erfindung ist zumindest ein elektrisches Modul, ein Elektronikmodul, eine mechanische oder magnetische Feder und/oder zumindest eine Fluidzuführung in dem fluiddichten Raum angeordnet.

Vorzugsweise werden also Peripheriemodule, welche Funktionskomponenten des Schwingungsisolators sind, in dem fluiddichten Raum angeordnet.

Es ist aber auch denkbar, Bauteile, welche nicht in unmittelbaren Zusammenhang mit dem Schwingungsisolator stehen, in dem fluiddichten Raum anzuordnen.

In dem fluiddichten Raum herrscht gegenüber dem Vakuum ein Überdruck, so daß die jeweiligen Module beziehungsweise Komponenten nicht für den Einsatz im Vakuum konzipiert werden müssen.

Gleichzeitig bildet der fluiddichte Raum vorzugsweise einen Arbeitsraum des Schwingungsisolators.

Bei den Elektronikmodulen kann es sich beispielsweise um Sensoren wie Positionssensoren, Beschleunigungssensoren oder Geophone handeln.

Weiter kann es sich um Aktoren, wie Elektromagnete, Motoren, insbesondere Linearmotoren, handeln.

Aber auch die Integration von weiteren mechanischen Bauteilen ist denkbar, insbesondere von Federn, Knickpendeln, etc., welche ebenfalls Funktionselemente des Schwingungsisolators sind.

Bei einer bevorzugten Ausführungsform der Erfindung herrscht in dem fluiddichten Raum gegenüber der Umgebung, insbesondere gegenüber dem Vakuum ein Überdruck von mehr als 0,3 Bar, vorzugsweise von mehr als 0,8 Bar und besonders bevorzugt von mehr als 1 Bar.

Es hat sich gezeigt, daß für Normaldruck konzipierte Komponenten ohne weitere konstruktive Eingriffe häufig bei Überdrücken von bis zu 8 Bar verwendbar sind, beziehungsweise mit relativ geringem Aufwand gegenüber Druck geschützt werden können.

Ein Überdruck von bis zu 8 Bar stellt in der Regel keine besonderen Anforderungen an die Materialien der Komponenten.

So wirkt die Luft zum einen als Isolator, zum anderen kann durch Konvektion der Luft eine gute Kühlung der jeweiligen Bauteile erreicht werden.

Der Schwingungsisolator weist bei einer bevorzugten Ausführungsform der Erfindung zumindest eine Fluidzuführung auf, insbesondere weist er eine Fluidzuführung für Kühlwasser oder Luft auf, wobei die in dem fluiddichten Raum angeordneten elektrischen oder elektronischen Module zumindest teilweise über das Fluid kühlbar sind.

Gleichzeitig kann über das Fluid, welches zur Kühlung vorgesehen ist, der vorzugsweise als Luftfeder ausgebildete Schwingungsisolator betrieben werden.

Die Erfindung betrifft des weiteren einen Schwingungsisolator zur Verwendung im Vakuum, welcher eine Feder, die einen im wesentlichen fluiddichten Raum aufweist, umfaßt.

Gemäß der Erfindung ist der im wesentlichen fluiddichte Raum über zumindest zwei nacheinander angeordneten Dichtungen gegenüber den umgebenden Vakuum abgedichtet, wobei in den Bereich, welcher zwischen den Dichtungen liegt, zumindest eine Fluidleitung führt, mittels der über eine Vakuumpumpe ein Unterdruck gegenüber dem fluiddichten Raum erzeugbar ist.

Es wird also aus Sicht der Vakuumkammer bereits nach der ersten Dichtung ein Unterdruck erzeugt. Vorzugsweise besteht so zwischen zweiter Dichtung und dem Vakuum nur eine relativ geringere Druckdifferenz.

Es hat sich gezeigt, daß so als zweite vakuumseitige Dichtung eine Dichtung verwendet werden kann, welche zwar nur zum Einsatz bei geringen Druckdifferenzen ausgebildet ist, aber eine äußerst geringe Leckrate aufweist.

Die erste Dichtung, also die Dichtung welche dem fluiddichten Raum zugewandt ist, ist dagegen für höhere Druckdifferenzen ausgebildet, hat dagegen aber eine höhere Leckrate gegenüber der zweiten vakuumseitigen Dichtung.

Vorzugsweise liegt die Druckdifferenz hinter der zweiten vakuumseitigen Dichtung gegenüber dem Vakuum bei maximal 0,6, vorzugsweise 0,4 und besonders bevorzugt bei maximal 0,1 Bar.

Dagegen beträgt die Druckdifferenz gegenüber dem fluiddichten unter Überdruck stehenden Raum mindestens 1, vorzugsweise mindestens 3 und besonders bevorzugt mindestens 5 Bar.

Die Erfindung betrifft des weiteren eine Anordnung mit einem Schwingungsisolator, wobei der Schwingungsisolator in einer Vakuumkammer angeordnet ist.

Vakuumkammer und/oder Schwingungsisolator sind dabei mit Fluiddurchführungen oder elektrischen Durchführungen versehen, welche zum fluiddichten Raum führen.

So können, beispielsweise über elektrische Durchführungen, Sensoren, Aktoren und andere elektrische Bauteile angesteuert werden.

Über Fluiddurchführungen kann beispielsweise Luft zum Betrieb einer Luftfeder oder ein Kühlfluid durchgeführt werden.

Vorteilhaft ist dabei insbesondere, daß die Fluiddurchführungen und elektrischen Durchführungen in dem fluiddichten Raum enden, also nicht in den Vakuumbereich weiter geführt sein müssen. So kann die durch den Schwingungsisolator bedingte Leckrate in einer Vakuumanlage erheblich reduziert werden.

### Kurze Beschreibung der Zeichnungen

Die Erfindung soll im Folgenden anhand der Zeichnungen Fig. 1 bis Fig. 4 näher erläutert werden.
Fig. 1 zeigt eine schematische Seitenansicht eines Ausführungsbeispiels eines Schwingungsisolators.
Fig. 2 zeigt schematisch einen Schwingungsisolator von unten.
Fig. 3 zeigt eine schematische teilweise aufgebrochene isometrische Ansicht eines Schwingungsisolators.
Fig. 4 zeigt eine Detailansicht.

### Detaillierte Beschreibung der Zeichnungen

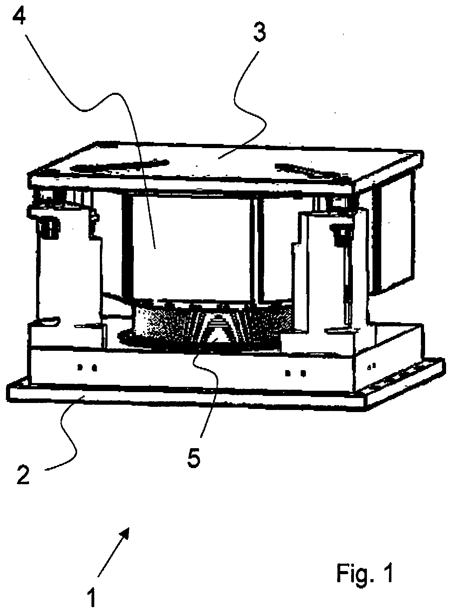

Bezugnehmend auf Fig. 1 sollen die wesentlichen Bestandteile eines Schwingungsisolators 1 anhand einer schematischen Darstellung näher erläutert werden.

Der Schwingungsisolator 1 umfaßt eine Basis 2 sowie eine Platte 3 auf welcher eine Last (nicht dargestellt) schwingungsisoliert gelagert werden kann.

Zwischen der Basis 2 und der Platte 3, ist einen Feder angeordnet, welche in diesem Ausführungsbeispiel als Luftfeder ausgebildet ist. Die Feder 4 umfaßt einen Arbeitsraum mit einem Faltenbalg 5 und bildet so einen im wesentlichen fluiddichten Raum. Es handelt sich bei der als Luftfeder ausgebildeten Feder 4 also um eine geschlossene Luftfeder.

Derartige Luftfedern haben den Vorteil einer niedrigen Eigenfrequenz und können gleichzeitig vertikal und horizontal wirksam ausgebildet sein.

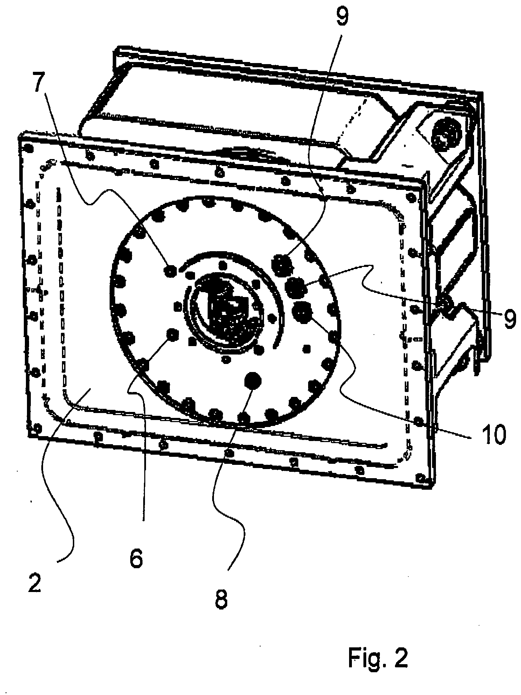

Fig. 2 zeigt eine schematische Rückansicht des in Fig. 1 dargestellten Schwingungsisolators.

Zu erkennen ist die Basis 2, an welcher die verschiedenen Zuführungen für Peripheriekomponenten zum Betrieb des Schwingungsisolators angebracht sind.

So befinden sich an der Basis eine Kühlwasserzuführung 6 sowie ein Kühlwasserablauf 7, über welche in dem fluiddichten Raum angeordnete elektrische und elektronische Bauelemente gekühlt werden können.

Weiter ist eine Luftzuführung 8 vorgesehen, über welche die als Luftfeder ausgebildete Feder 4 mit Arbeitsdruck versorgt werden kann.

Darüber hinaus gibt es noch Anschlüsse für Sensoren 9, sowie einen Anschluß für einen Aktor 10.

Die so vorhandenen elektrischen Leitungen und Fluidleitungen führen bei dem Schwingungsisolator 1, welcher in eine Vakuumkammer eingebaut werden kann, direkt in den fluiddichten Raum. Wenn der Schwingungsisolator 1 mit seiner Basis 2 in einer Vakuumkammer montiert wird, braucht nur die Basis 2 gegen die Vakuumkammer (nicht dargestellt) abgedichtet zu werden.

Weitere Durchführungen für Peripherimodule des Schwingungsisolationslagers 1 sind in der Vakuumkammer nicht erforderlich.

Dadurch kann die durch das Schwingungsisolationslager 1 verursachte Leckrate des Vakuumsystems herabgesetzt werden. Des weiteren brauchen in diesem Ausführungsbeispiel die in dem durch die Luftfeder definierten fluiddichten Raum angeordneten elektrischen und mechanischen Module wie Aktoren, Sensoren, Motoren, etc., nicht für die Verwendung im Vakuum dimensioniert zu sein und können wesentlich einfacher über die Zuführung von Kühlwasser oder Kühlluft gekühlt werden.

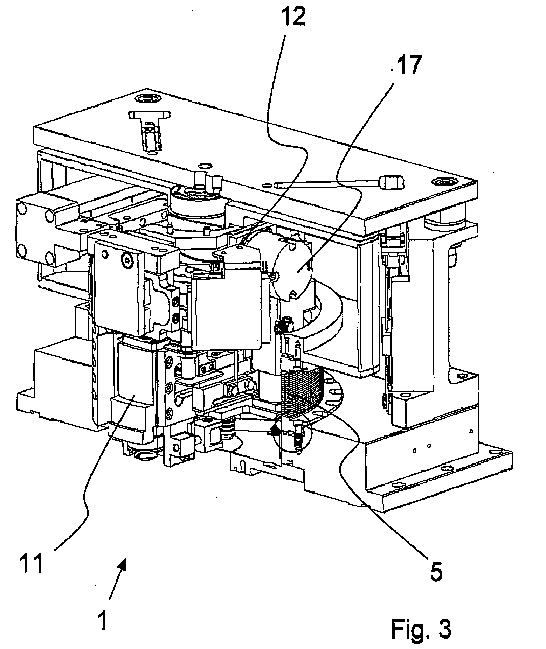

Fig. 3 zeigt eine isometrische Ansicht eines Schwingungsisolators, welcher im teilweise aufgebrochenen Zustand dargestellt ist.

In dieser Darstellung ist insbesondere der fluiddichte Raum aufgebrochen. So ist der Faltenbalg 5 nur im hinteren Bereich zu erkennen und im vorderen Bereich ausgeblendet, so daß die in dem fluiddichten Raum angeordneten Module zu erkennen sind.

In diesem Ausführungsbeispiel ist in dem fluiddichten Raum ein Motor 11 angeordnet, über welchen das Schwingungsisolationslager 1 hinsichtlich der Höhe kalibriert werden kann.

Des weiteren befindet sich in dem fluiddichten Raum ein Sensormodul 12 mit zumindest zwei Positionssensoren (nicht dargestellt) für jeweils eine Raumrichtung. Insbesondere zur Erfassung von durch Erderschütterungen hervorgerufenen Schwingungen ist des weiteren ein Geophon 15 vorgesehen.

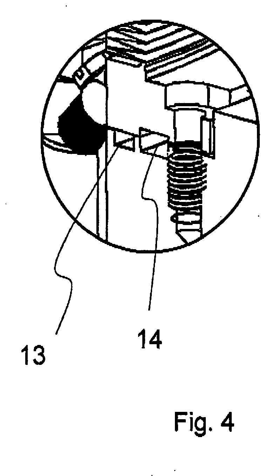

Fig. 4 zeigt eine der Fig. 3 entnommene Detailansicht, anhand welcher die Abdichtung des fluiddichten Raums gegen das Vakuum näher erläutert werden soll.

Zur Abdichtung sind zwei Dichtungen, die Dichtungen 13 und 14, vorgesehen.

Dabei ist die druckseitige Dichtung 13 in diesem Ausführungsbeispiel vorzugsweise als O-Ring ausgebildet.

Bei der vakuumseitigen Dichtung 14 handelt es sich um eine Dichtung mit geringer Leckrate, welche ihre Wirkung allerdings nur bei relativ geringen Druckdifferenzen entfaltet.

Daher wird über eine Fluidleitung, welche beliebig ausgebildet sein kann (nicht dargestellt), zwischen der vakuumseitigen Dichtung 14 und der druckseitigen Dichtung 13 abgepumpt, so daß bereits zwischen den Dichtung 13 und 14 ein Vakuum anliegt.

Durch diese Anordnung konnte die durch den Schwingungsisolator bedingte Leckrate weiter reduziert werden.

Es versteht sich, daß die Erfindung nicht auf eine Kombination vorbeschriebener Merkmale beschränkt ist, sondern daß der Fachmann sämtliche beschriebenen Merkmale soweit dies technisch sinnvoll ist, kombinieren wird.

### Bezugszeichenliste

- 1: - Schwingungsisolator
- 2: - Basis
- 3: - Platte
- 4: - Feder
- 5: - Faltenbalg
- 6: - Kühlwasserzufuhr
- 7: - Kühlwasserablauf
- 8: - Luftzuführung
- 9: - Anschlüsse Sensoren
- 10: - Anschluß Aktor
- 11: - Motor
- 12: - Sensormodul
- 13: - Dichtung
- 14: - Dichtung
- 15: - Geophon

## Patentansprüche

1. Anordnung mit zumindest einem Schwingungsisolator (1), welcher in einer Vakuumkammer angeordnet ist, wobei der Schwingungsisolator eine Feder (4) umfasst, die einen im Wesentlichen fluiddichten Raum aufweist, wobei der im Wesentlichen fluiddichte Raum über zumindest zwei nacheinander angeordnete Dichtungen (13,14) gegenüber dem umgebenden Vakuum abgedichtet ist, **dadurch kennzeichnet, dass** in einen Raum zwischen den Dichtungen (13,14) zumindest eine Fluidleitung führt, mittels der ein Unterdruck gegenüber dem fluiddichten Raum erzeugbar ist.

2. Anordnung mit zumindest einem Schwingungsisolator (1) nach dem vorstehenden Anspruch, **dadurch gekennzeichnet, daß** über die zumindest eine Fluidleitung ein Unterdruck erzeugbar ist, der maximal 0,6, vorzugsweise 0,4 und besonders bevorzugt maximal 0,1 bar höher ist, als der Druck eines umgebenden Volumens, insbesondere eines umgebenden Vakuums.

3. Anordnung mit zumindest einem Schwingungsisolator (1) nach einem der vorstehenden beiden Ansprüche, **dadurch gekennzeichnet, daß** über die zumindest eine Fluidleitung ein Unterdruck erzeugbar ist, der mindestens 1, vorzugsweise mindestens 3 und besonders bevorzugt mindestens 5 bar niedriger ist, als der Druck in dem fluiddichten Raum.

4. Anordnung mit zumindest einem Schwingungsisolator (1) zur Verwendung im Vakuum, umfassend zumindest eine Feder, die einen im Wesentlichen fluiddichten Raum aufweist, wobei zumindest ein elektrisches Modul, ein Elektronikmodul, eine mechanische oder magnetische Feder (4) und/oder zumindest eine Fluidzuführung in dem fluiddichten Raum angeordnet ist.

5. Anordnung mit zumindest einem Schwingungsisolator (1) nach Anspruch 1, **dadurch gekennzeichnet, daß** es sich bei dem Elektronikmodul um einen Sensor handelt.

6. Anordnung mit zumindest einem Schwingungsisolator (1) nach Anspruch 1, **dadurch gekennzeichnet, daß** es sich bei dem Elektronikmodul um einen Aktor handelt.

7. Anordnung mit zumindest einem Schwingungsisolator (1) nach einem der vorstehenden Ansprüche, **dadurch gekennzeichnet, daß** es sich bei dem elektrischen Modul um einen Motor (11) oder einen Elektromagneten handelt.

8. Anordnung mit zumindest einem Schwingungsisolator (1) nach einem der vorstehenden Ansprüche, **dadurch gekennzeichnet, daß** es sich bei der mechanischen Feder (4) um eine Blattfeder handelt.

9. Anordnung mit zumindest einem Schwingungsisolator nach einem der vorstehenden Ansprüche, **dadurch gekennzeichnet, daß** in dem fluiddichten Raum gegenüber der Umgebung ein Überdruck von mehr als 0,3 bar, vorzugsweise von mehr als 0,8 bar und besonders bevorzugt von mehr als 1 bar herrscht.

10. Anordnung mit zumindest einem Schwingungsisolator (1) nach einem der vorstehenden Ansprüche, **dadurch gekennzeichnet, daß** in dem fluiddichten Raum gegenüber dem Atmosphärendruck ein Überdruck 0,5 bis 15 bar, bevorzugt von 1 bis 10 bar und besonders bevorzugt von 5 bis 8 bar herrscht.

11. Anordnung mit zumindest einem Schwingungsisolator (1) nach einem der vorstehenden Ansprüche, **dadurch gekennzeichnet, daß** der Schwingungsisolator eine Fluidzuführung, insbesondere für Kühlwasser oder Luft aufweist, wobei in dem fluiddichten Raum angeordnete elektrische oder elektronische Module zumindest teilweise über das Fluid kühlbar sind.

12. Anordnung mit zumindest einem Schwingungsisolator (1) nach einem der vorstehenden Ansprüche, **dadurch gekennzeichnet, daß** der Schwingungsisolator als Luftlager, insbesondere als vertikal und horizontal wirksames Luftlager ausgebildet ist.

13. Anordnung mit zumindest einem Schwingungsisolator (1) nach einem der vorstehenden Ansprüche, **dadurch gekennzeichnet, daß** die Vakuumkammer und/oder der Schwingungsisolator (1) Fluiddurchführungen zum fluiddichten Raum aufweist.

14. Anordnung mit zumindest einem Schwingungsisolator (1) nach dem vorstehenden Anspruch, **dadurch gekennzeichnet, daß** die Vakuumkammer und/oder der Schwingungsisolator (1) elektrische Durchführungen zum fluiddichten Raum aufweist.

## Claims

1. Arrangement with at least one vibration isolator (1), which is arranged in a vacuum chamber, wherein the vibration isolator comprises a spring (4) that has an essentially fluid-tight chamber, wherein the essentially fluid-tight chamber is sealed against the surrounding vacuum by means of at least two seals (13,14) arranged one after the other,
**characterized in that** at least one fluid line leads between the seals (13,14), wherein a low pressure relative to the fluid-tight chamber can be generated by means of this fluid line.

2. Arrangement with at least one vibration isolator (1)according to the preceding claim **characterized in that** a low pressure that is higher by a maximum of 0.6, advantageously 0.4, and especially preferably a maximum of 0.1 bar than the pressure of a surrounding volume, in particular, a surrounding vacuum, can be generated via the one or more fluid lines.

3. Arrangement with at least one vibration isolator (1)according to one of the two preceding claims **characterized in that** a low pressure that is lower by at least 1, advantageously at least 3, and especially preferably at least 5 bar than the pressure in the fluid-tight chamber can be generated via the one or more fluid lines.

4. Arrangement with at least one vibration isolator (1) for use in a vacuum comprising at least one spring that has an essentially fluid-tight chamber,
wherein at least one electrical module, one electronic module, one mechanical or magnetic spring (4), and/or at least one fluid inlet is arranged in the fluid-tight chamber.

5. Arrangement with at least one vibration isolator (1)according to Claim 1 **characterized in that** the electronic module involves a sensor.

6. Arrangement with at least one vibration isolator (1)according to Claim 1 **characterized in that** the electronic module involves an actuator.

7. Arrangement with at least one vibration isolator (1)according to one of the preceding claims **characterized in that** the electrical module involves a motor (11) or an electromagnet.

8. Arrangement with at least one vibration isolator (1)according to one of the preceding claims **characterized in that** the mechanical spring (4) involves a leaf spring.

9. Arrangement with at least one vibration isolator (1)according to one of the preceding claims **characterized in that** an overpressure of more than 0.3 bar, advantageously of more than 0.8 bar, and especially preferably of more than 1 bar prevails in the fluid-tight chamber relative to the surroundings.

10. Arrangement with at least one vibration isolator (1)according to one of the preceding claims **characterized in that** an overpressure from 0.5 to 15 bar, preferably from 1 to 10 bar, and especially preferably from 5 to 8 bar prevails in the fluid-tight chamber relative to atmospheric pressure.

11. Arrangement with at least one vibration isolator (1)according to one of the preceding claims **characterized in that** the vibration isolator has a fluid inlet, in particular, for cooling water or air, wherein electrical or electronic modules arranged in the fluid-tight chamber can be cooled at least partially by means of the fluid.

12. Arrangement with at least one vibration isolator (1)according to one of the preceding claims **characterized in that** the vibration isolator is constructed as a pneumatic mount, in particular, as a pneumatic mount active vertically and horizontally.

13. Arrangement with at least one vibration isolator (1) according to one ore more of the preceding claims, **characterized in that** the vacuum chamber and/or the vibration isolator has fluid feedthroughs to the fluid-tight chamber.

14. Arrangement with at least one vibration isolator (1)according to the preceding claim **characterized in that** the vacuum chamber and/or the vibration isolator (1) has electrical feedthroughs to the fluid-tight chamber.

## Revendications

1. Ensemble comprenant au moins un isolateur de vibrations (1), lequel est agencé dans une chambre à vide, dans lequel l'isolateur de vibrations comporte un ressort (4) qui comprend une chambre sensiblement étanche au fluide, dans lequel la chambre sensiblement étanche au fluide est étanchéifiée par rapport au vide ambiant par l'intermédiaire d'au moins deux joints (13, 14) agencés l'un à la suite de l'autre,
**caractérisé en ce que** :
au moins une conduite de fluide, au moyen de laquelle une pression négative peut être produite par rapport à la chambre étanche au fluide, mène dans une chambre entre les joints (13, 14).

2. Ensemble comprenant au moins un isolateur de vibrations (1) selon la revendication précédente, **caractérisé en ce qu'**une pression négative est produite par l'intermédiaire de ladite au moins une conduite de fluide, laquelle est supérieure de maximum 0,6, de préférence de 0,4 et de manière particulièrement préférée de maximum 0,1 bar à la pression d'un volume ambiant, en particulier d'un vide ambiant.

3. Ensemble comprenant au moins un isolateur de vibrations (1) selon l'une des deux revendications précédentes, **caractérisé en ce qu'**une pression négative peut être produite par l'intermédiaire de ladite au moins une conduite de fluide, laquelle est inférieure d'au moins 1, de préférence d'au moins 3 et de manière particulièrement préférée d'au moins 5 bar à la pression dans la chambre étanche au fluide.

4. Ensemble comprenant au moins un isolateur de vibrations (1) destiné à être utilisé dans le vide, comportant au moins un ressort qui présente une chambre sensiblement étanche au fluide, dans lequel au moins un module électrique, un module électronique, un ressort mécanique ou magnétique (4) et/ou au moins une amenée de fluide est agencé dans la chambre étanche au fluide.

5. Ensemble comprenant au moins un isolateur de vibrations (1) selon la revendication 1, **caractérisé en ce que** le module électronique est un capteur.

6. Ensemble comprenant au moins un isolateur de vibrations (1) selon la revendication 1, **caractérisé en ce que** le module électronique est un actionneur.

7. Ensemble comprenant au moins un isolateur de vibrations (1) selon l'une quelconque des revendications précédentes, **caractérisé en ce que** le module électrique est un moteur (11) ou un électroaimant.

8. Ensemble comprenant au moins un isolateur de vibrations (1) selon l'une quelconque des revendications précédentes, **caractérisé en ce que** le ressort mécanique (4) est un ressort à lames.

9. Ensemble comprenant au moins un isolateur de vibrations selon l'une quelconque des revendications précédentes, **caractérisé en ce qu'**une pression positive de plus de 0,3 bar, de préférence de plus de 0,8 bar et de manière particulièrement préférée de plus de 1 bar règne dans la chambre étanche au fluide.

10. Ensemble comprenant au moins un isolateur de vibrations (1) selon l'une quelconque des revendications précédentes, **caractérisé en ce qu'**une pression positive de 0,5 à 15 bar, de préférence de 1 à 10 bar et de manière particulièrement préférée de 5 à 8 bar par rapport à la pression atmosphérique règne dans la chambre étanche au fluide.

11. Ensemble comprenant au moins un isolateur de vibrations (1) selon l'une quelconque des revendications précédentes, **caractérisé en ce que** l'isolateur de vibrations comprend une amenée de fluide, en particulier pour l'eau froide ou l'air, dans lequel les modules électriques ou électroniques agencés dans la chambre étanche au fluide peuvent être refroidis au moins en partie par le fluide.

12. Ensemble comprenant au moins un isolateur de vibrations (1) selon l'une quelconque des revendications précédentes, **caractérisé en ce que** l'isolateur de vibrations est réalisé sous la forme d'un palier à air, en particulier sous la forme d'un palier à air agissant verticalement et horizontalement.

13. Ensemble comprenant au moins un isolateur de vibrations (1) selon l'une quelconque des revendications précédentes, **caractérisé en ce que** la chambre à vide et/ou l'isolateur de vibrations (1) comprend des passages de fluide menant à la chambre étanche au fluide.

14. Ensemble comprenant au moins un isolateur de vibrations (1) selon la revendication précédente, **caractérisé en ce que** la chambre à vide et/ou l'isolateur de vibrations (1) comprend des passages électriques menant à la chambre étanche au fluide.
